(19) Europäisches Patentamt
European Patent Office
Office européen des brevets

(11) **EP 3 206 001 A1**

(12) **EUROPÄISCHE PATENTANMELDUNG**

(43) Veröffentlichungstag:
16.08.2017   Patentblatt 2017/33

(51) Int Cl.:
*G01M 3/22* (2006.01)

(21) Anmeldenummer: **17157133.4**

(22) Anmeldetag: **27.11.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.12.2007   DE 102007057944**

(62) Dokumentnummer(n) der früheren Anmeldung(en) nach Art. 76 EPÜ:
**08855308.6 / 2 217 902**

(71) Anmelder: **Inficon GmbH**
**50968 Köln (DE)**

(72) Erfinder: **Dr. Wetzig, Daniel**
**50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

Bemerkungen:
Diese Anmeldung ist am 21-02-2017 als Teilanmeldung zu der unter INID-Code 62 erwähnten Anmeldung eingereicht worden.

(54) **VORRICHTUNG ZUR DICHTHEITSPRÜFUNG**

(57)    Eine Vorrichtung zur Dichtheitsprüfung mit einer Pumpenanordnung (18), die aus einer einen Prüfling (20) aufnehmenden Prüfkammer (10) oder aus einem Prüfling (20) Gas abpumpt, und einem an die Pumpenanordnung angeschlossenen Prüfgassensor (27), ist dadurch gekennzeichnet, dass die Pumpenanordnung einen über dem Atmosphärendruck liegenden hohen Druck erzeugt, und dass der Prüfgassensor (27) an den hohen Druck angeschlossen ist.

Fig.1

**Beschreibung**

Die Erfindung betrifft ein Verfahren zur Dichtheitsprüfung, bei welchem ein mit Prüfgas gefüllter Prüfling in eine Prüfkammer eingesetzt wird, und bei welchem ein Gasgemisch aus einem aus der Prüfkammer abgezogenen Prüfgas und einem Trägergas mit einem Prüfgassensor auf Prüfgas untersucht wird.

Die Erfindung betrifft ferner ein Verfahren zur Dichtheitsprüfung, bei welchem ein evakuierter Prüfling der äußeren Einwirkung eines Prüfgases ausgesetzt wird, und bei welchem ein Gasgemisch aus einem aus dem Prüfling abgezogenen Prüfgas und einem Trägergas mit einem Prüfgassensor auf Prüfgas untersucht wird.

Ein bekanntes Verfahren zur integralen Dichtheitsprüfung sieht vor, dass der mit Prüfgas gefüllte Prüfling in eine Prüfkammer gelegt wird. Die Prüfkammer wird mit einem Vakuumsystem evakuiert, wobei im Vakuumsystem ein Prüfgassensor integriert ist. Ein typisches Prüfgas ist Helium, das bisher unter Verwendung eines Massenspektrometers nachgewiesen wird. Zum Nachweis von Helium sind Hochvakuumbedingungen erforderlich, wobei der Druck p weniger als $10^{-4}$ mbar betragen muss.

Ein anderes Verfahren zur integralen Dichtheitsprüfung sieht vor, dass der Prüfling evakuiert wird und der äußeren Einwirkung eines Prüfgases ausgesetzt wird. Ein an den Prüfling angeschlossenes Vakuumsystem ermöglicht einen massenspektroskopischen Nachweis des Prüfgases.

Dichtheitsprüfsysteme haben eine Zeitkonstante, die normalerweise vom Anwendungsfall bestimmt wird. Die Zeitkonstante gibt die Zeit, bis zu der stabile Signalbedingungen erreicht werden, an. Sie wird durch das Prüfkammervolumen und das Prüfgassaugvermögen an der Prüfkammer bestimmt:

$$\tau = V / S$$

$\tau$:  Systemzeitkonstante (63%-Zeit)
V:  Volumen der Prüfkammer
S:  Saugvermögen der Pumpe für das Prüfgas

Die kleinste Leckrate, die mit einer Anlage gemessen werden kann, ist von dem kleinsten Prüfgaspartialdruck, der vom System nachgewiesen werden kann, abhängig. Der in der jeweiligen Applikation herrschende Prüfgasdruck ist wie folgt gegeben:

$$p = Q / S$$

p:  Partialdruck des Prüfgases
Q:  Leckrate des Prüfgases aus dem Prüfling
S:  Saugvermögen der Pumpe für das Prüfgas

Hier ist ein Widerspruch gegeben: Es kann nicht gleichzeitig der Prüfgaspartialdruck erhöht und die Zeitkonstante reduziert werden. Ein großes Prüfgassaugvermögen reduziert zwar die Signalreaktionszeit, jedoch ebenfalls den Prüfgasdruck und damit die Systemempfindlichkeit.

In WO 2005/054806 A1 (Sensistor) ist ein Vakuumprüfsystem nach dem Oberbegriff der jeweiligen Ansprüche beschrieben, bei dem in eine Prüfkammer oder in den Prüfling ein Prüfgas eingeführt wird. Im jeweils anderen der beiden Hohlräume wird ein Trägergas zugeführt. Wenn am Prüfling ein Leck vorhanden ist, gelangt Prüfgas in den Trägergasstrom und wird mit diesem zu einer verdichtenden Pumpe abgeführt. An den Auslass der Pumpe ist ein Prüfgassensor angeschlossen, welcher unter Atmosphärendruck arbeitet. Unter Anwendung des Trägergasverfahrens wird der Prüfgaspartialdruck des verdichteten Gasgemisches hinter der Pumpe gemessen. Damit kann eine hohe Systemempfindlichkeit erreicht werden, weil der Prüfgaspartialdruck des verdichteten Gases hinter der Pumpe hoch ist. Die Verdichterpumpe erhöht den Totaldruck, der in der Prüfkammer bzw. im Innern des Prüflings herrscht, am Pumpenauslass auf 1000 mbar.

Der Erfindung liegt die Aufgabe zugrunde, ein Verfahren zur Dichtheitsprüfung anzugeben, bei dem die Menge des benötigten Trägergases verringert ist.

Eine erste Variante der Erfindung ist im Patenanspruch 1 definiert. Hiernach wird das Trägergas dem Strom des Prüfgases hinter der den Prüfling enthaltenden Prüfkammer zugeführt.

Das Trägergas kann beispielsweise einer im Strom des Prüfgases an die Prüfkammer anschließenden ersten Pumpe zugeführt werden oder zwischen einer ersten Pumpe und einer nachfolgenden zweiten Pumpe.

Mit der Erfindung wird eine hohe Empfindlichkeit der Prüfgasdetektion erreicht, wobei der Trägergasstrom gering gehalten wird.

Eine zweite Variante der Erfindung ist durch den Patentanspruch 4 bezeichnet. Hiernach ist der Prüfgassensor an oder vor der letzten Stufe einer mehrstufigen Pumpenanordnung angeordnet. Während im Stand der Technik der Prüfgassensor am Ende einer Pumpenanordnung bei Atmosphärendruck angeordnet ist, sieht die Erfindung vor, den Prüfgassensor innerhalb einer mehrstufigen Pumpenanordnung zur Prüfkammer hin zu verlagern. Hierdurch wird der Vorteil einer verkürzten Messzeit erreicht, weil die Laufzeit des Prüfgases von der Prüfkammer zum Messsensor verkürzt ist.

Eine dritte Variante des erfindungsgemäßen Verfahrens ist durch den Patentanspruch 5 definiert. Dieser sieht vor, dass der Prüfling ohne eine umgebende Prüfkammer der äußeren Atmosphäre ausgesetzt ist, und dass zur Erzeugung der das Prüfgas enthaltenden Atmosphäre eine Prüfgaspistole benutzt wird. Ein Vorteil besteht darin, dass eine Prüfkammer nicht benötigt wird. Außerdem wird die das Prüfgas enthaltende Atmosphäre in einem begrenzten Flächenbereich des Prüflings erzeugt, so dass der Ort, an dem ein Leck erkannt wurde, leicht zu identifizieren ist.

Eine vierte Variante der Erfindung ist durch den Patentanspruch 8 bezeichnet. Hiernach ist bei einer Vorrichtung zur Dichtheitsprüfung vorgesehen, dass die Pumpenanordnung einen über dem Atmosphärendruck liegenden hohen Druck erzeugt und dass der Prüfgassensor an den hohen Druck angeschlossen ist. Der Vorteil besteht darin, dass eine Verdichtung des Gasgemisches über den Atmosphärendruck hinaus vorgenommen wird, wodurch auch eine höhere Verdichtung des Prüfgases erfolgt. Damit ergibt sich ein höherer Partialdruck des Prüfgases mit der Folge, dass die Druckmessung mit höherer Empfindlichkeit erfolgt.

Bei der Erfindung wird generell das Trägergasverfahren angewandt, wobei der Prüfgaspartialdruck des verdichteten Gasgemisches hinter der das Gas komprimierenden Fördereinheit gemessen wird. Damit kann eine hohe Systemempfindlichkeit erreicht werden, weil der Prüfgaspartialdruck des verdichteten Gases hoch ist. Das erfindungsgemäße Verfahren setzt voraus, dass der Prüfgassensor den Partialdruck des Prüfgases unabhängig vom Totaldruck des Gasgemisches nachweisen kann. Solche selektiven Partialdrucksensoren, die den Partialdruck unabhängig vom Totaldruck messen, sind bekannt, beispielsweise als Quarzfenstersensor.

Die Verdichterpumpe erhöht den Totaldruck, der der Prüfkammer bzw. im Innern des Prüflings herrscht, am Pumpenauslass auf 1.000 mbar. Das Verhältnis zwischen dem Druck vor und dem Druck hinter der Pumpe ist das Kompressionsverhältnis. Beim Kompressionsschritt bleibt die Konzentration im Fördermedium erhalten. Also steigt mit der Kompression der Prüfgaspartialdruck im geförderten Gasgemisch um das Kompressionsverhältnis.

Die optimale Empfindlichkeit wird erreicht, wenn der zum Sensor geführte Gasstrom den Trägergasstrom nicht übersteigt und der Trägergasstrom möglichst gering gewählt wird. Gegebenenfalls kann mittels eines Kompressors das geförderte Gas weiter verdichtet werden, so dass der Totaldruck über 1.000 mbar liegt. Dadurch wird auch der Prüfgaspartialdruck weiter erhöht.

Die Erfindung ermöglicht eine schnelle Systemreaktionszeit (niedrige Zeitkonstante) bei gleichzeitig hoher Systemempfindlichkeit.

Der höhere Prüfgaspartialdruck kann zur Verbesserung der Nachweisgrenze des Systems oder zur Reduktion der Messzeit genutzt werden. Der Druck in der Prüfkammer kann beliebig weit reduziert werden, ohne dass dies Einfluss auf den Arbeitsdruck vor dem Prüfgassensor hinter der Verdichterpumpe hat. Damit ist es möglich, die Austauschzeit in der Prüfkammer durch Absenkung des Druckes zu reduzieren, ohne an Empfindlichkeit zu verlieren. Schließlich ist es möglich, durch Absenken des Arbeitsdrucks in der Prüfkammer bei gleichzeitig proportional abgesenktem Trägergasstrom die Empfindlichkeit des Nachweissystems zu erhöhen, ohne die Austauschzeit zu verschlechtern.

Als Prüfgas ist jegliche Gasart möglich, zu der ein vom Totaldruck unabhängiger Prüfgassensor existiert. Beispielsweise eignet sich als Prüfgas Helium oder Wasserstoff.

Als Trägergas kommen alle Gase in Betracht, auch solche, die mit einer konstanten Prüfgaskonzentration verunreinigt sind. Als Prüfgas eignen sich beispielsweise Stickstoff oder Luft.

Im Folgenden werden Ausführungsbeispiele der Erfindung unter Bezugnahme auf die Zeichnungen näher erläutert.

Es zeigen:

Fig. 1     eine schematische Darstellung eines Verfahrens nach der ersten Variante der Erfindung,

Fig. 2     eine schematische Darstellung eines Verfahrens nach der dritten und vierten Variante der Erfindung,

Fig. 3     eine schematische Darstellung eines abgewandelten Verfahrens nach der ersten, dritten und vierten Variante der Erfindung und

Fig. 4     eine Ausführungsform nach der zweiten und dritten Variante der Erfindung.

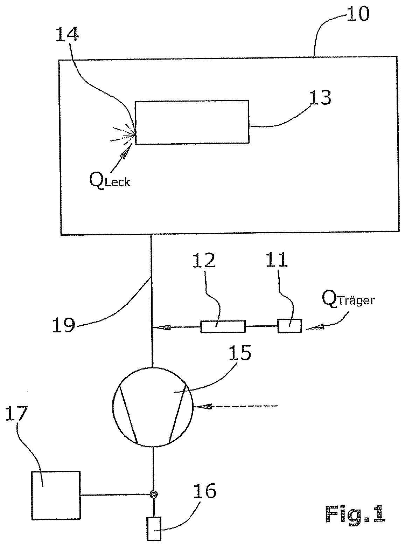

Bei der in Figur 1 dargestellten Variante ist eine Prüfkammer 10 vorgesehen, die vakuumdicht verschlossen ist.

In die Prüfkammer 10 ist ein Prüfling 13 eingebracht. Der Prüfling ist ein Hohlkörper, der auf Dichtheit zu prüfen ist. Zu diesem Zweck ist der Prüfling 13 mit einem Prüfgas gefüllt, beispielsweise mit Helium. Es sei angenommen, dass der Prüfling 13 ein Leck 14 habe, aus dem Prüfgas in die evakuierte Prüfkammer 10 hinein austritt. Der austretende Prüfgasstrom ist $Q_{Leck}$.

An die Prüfkammer 10 ist über eine Saugleitung 19 eine ansaugende Verdichterpumpe 15 zum Abfördern des Gases angeschlossen. Die Verdichterpumpe ist ein Kompressor, dessen Gasauslass 16 in die Atmosphäre führt und einen Totaldruck $p_{tot}$ = 1.000 mbar liefert. An die Saugleitung 19 ist ein Trägergaseinlass 11 angeschlossen, der mit einem Flusssensor 12 in Reihe geschaltet ist. Der Trägerstrom am Trägergaseinlass 11 ist mit $Q_{Träger}$ bezeichnet. In der Saugleitung 19 mischt sich das Prüfgas mit dem Trägergas, so dass ein Gasgemisch entsteht. Der Prüfgasanteil im Gasgemisch beträgt

$$c = \frac{Q_{Leck}}{Q_{Träger}}$$

Der Helium-Partialdruck $p_{He}$ ist

$$p_{He} = c * p_{tot}$$

Man erkennt, dass $p_{He}$ wegen des hohen Totaldrucks ebenfalls relativ hoch ist. Ein Prüfgassensor 17 ist an den Auslass der Verdichterpumpe 15 angeschlossen. Es handelt sich um einen Prüfgassensor, der bei Atmosphärendruck (1.000 mbar) arbeitet, beispielsweise um einen Heliumsensor der Marke "Wise Technology" der Anmelderin. Möglich ist auch ein strahlungsspektroskopischer Sensor, wie er beispielsweise in dem Lecksuchgerät HLD 5000 der Anmelderin verwendet wird oder ein chemischer Prüfgassensor. Ein derartiger Sensor ist in DE 10 2004 034 381 A beschrieben.

Das Saugvermögen S am Auslass der Prüfkammer 10 kann durch eine Hilfspumpe gesteigert werden, die an den Auslass angeschlossen ist und parallel zur Verdichterpumpe 15 arbeitet. Dadurch kann die Messzeit bzw. Reaktionszeit verkürzt werden, ohne dass die Empfindlichkeit verringert wird.

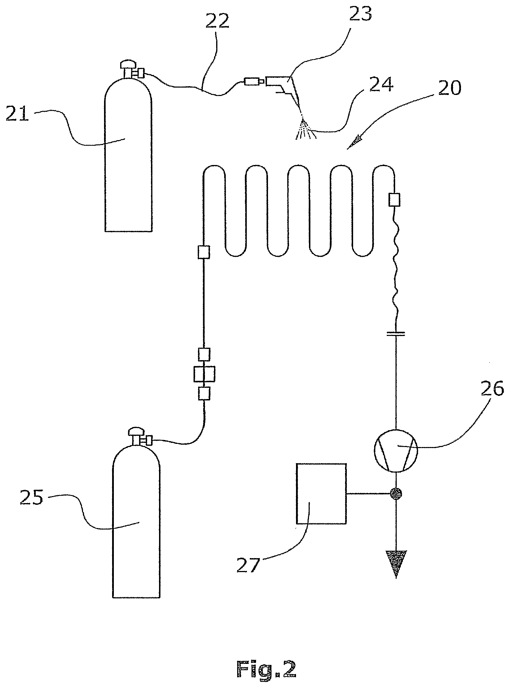

Figur 2 zeigt ein Beispiel der dritten Verfahrensvariante, bei der eine Prüfkammer nicht vorhanden ist. Der Prüfling 20 ist hier eine Rohrleitung, beispielsweise eine Rohrschlange, die auf Dichtheit zu Prüfen ist. Zu diesem Zweck wird der evakuierte Prüfling 20 ohne umgebende Prüfkammer der äußeren Einwirkung eines Prüfgases ausgesetzt. Das Prüfgas, z. B. Helium (He), wird von einer Prüfgasquelle 21 über einen flexiblen Schlauch 22 einer Prüfgaspistole 23 zugeführt, die einen Sprühkegel 24 erzeugt, mit dem der Prüfling angesprüht wird. Dadurch wird an der Außenseite des Prüflings eine Prüfgashaltige Atmosphäre erzeugt.

Das eine Ende des Prüflings 20 ist an eine Trägergasquelle 25 angeschlossen, die hier als Trägergas $N_2$ liefert. Das gegenüberliegende Ende des Prüflings ist an eine ansaugende Verdichterpumpe 26 angeschlossen, die einen Ausgangsdruck von 1.000 mbar erzeugt und in die Atmosphäre fördert. An den Auslass der Pumpe 26 ist auch hier ein Heliumsensor 27 angeschlossen, der dem Heliumsensor 17 des ersten Ausführungsbeispiels entspricht.

Die nachfolgende Tabelle gibt einen Vergleich eines üblichen Vakuumlecksuchverfahrens, bei dem der Prüfgassensor mit Vakuum arbeitet mit dem erfindungsgemäßen Trägergasverfahren, bei dem der Prüfgassensor an die Druckseite einer Verdichterpumpe angeschlossen ist:

|  | Vakuumlecksuchverfahren | Trägergasverfahren (Erfindung) |
|---|---|---|
| **Zeitkonstante** | $\tau$ = V/S | $\tau$ = p*V/$Q_{Träger}$ |
| **Partialdruck** | $p_{He}$ = Q/S | $p_{He}$ = $P_{tot}$*c \| c = $Q_{Leck}$ / ($Q_{Träger}$ + $Q_{Leck}$) |
|  |  |  |
| V = 1ltr. \| S = 1 l/s \| $Q_{Leck}$ = $1*10^{-8}$ mbar l/s \| $Q_{Träger}$ = 600 sccm \| p = 10 mbar | | |
| **Zeitkonstante** | $\tau$ = 1s | $\tau$ = 1s |
| **Partialdruck** | $p_{He}$ = $1*10^{-8}$ mbar | $p_{He}$ = $1*10^{-6}$ mbar ($p_{Sensor}$ = 1000 mbar) |

Aus der Tabelle ist erkennbar, dass der Prüfgas-Partialdruck bei dem erfindungsgemäßen Verfahren unter Zugrundelegung der angegebenen Parameter um den Faktor 100 größer ist, so dass die Empfindlichkeit ebenfalls entsprechend gesteigert ist. Andererseits kann bei gleicher Empfindlichkeit die Zeitkonstante, die die Ansprechzeit angibt, verkürzt werden.

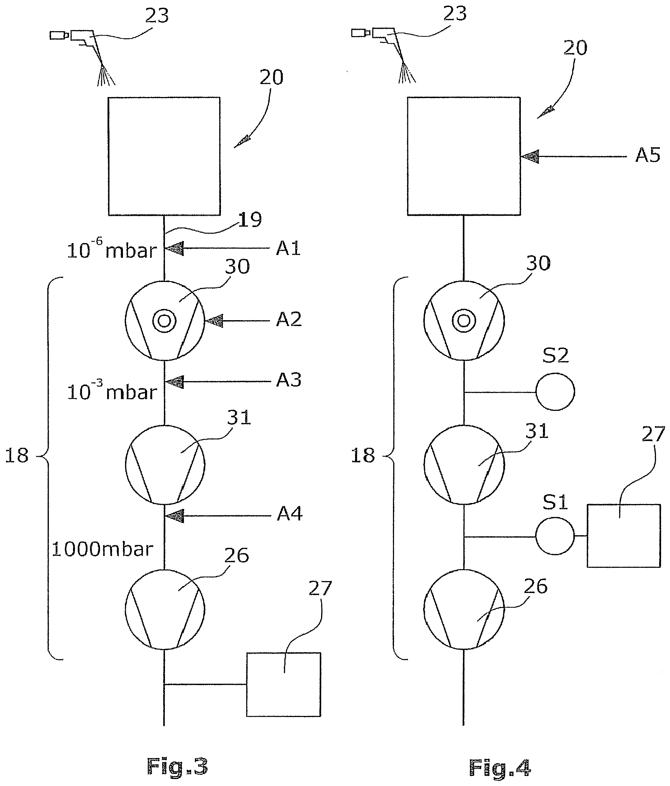

Bei dem Ausführungsbeispiel von Figur 3 ist der Prüfling 20 eine zu prüfende Kammer, die abdichtend verschließbar sein soll. Die Kammer wird mit einer Vakuumpumpe 30 evakuiert und mit einer Prüfgaspistole 23 wird außerhalb des Prüflings 20 eine Prüfgas enthaltende Atmosphäre erzeugt. Bei dem dargestellten Ausführungsbeispiel beträgt das Vakuum $10^{-6}$ mbar. Die Vakuumpumpe 30 ist Bestandteil einer Pumpenanordnung 18, die eine Reihenschaltung mehrerer Pumpen 30, 31 enthält. An den Auslass der Vakuumpumpe 30 ist die Vorvakuumpumpe 31 angeschlossen. Das Vorvakuum beträgt hier $10^{-3}$ mbar. Die Vorvakuumpumpe liefert das Gas unter Atmosphärendruck (1000 mbar). An den Auslass der Vorvakuumpumpe 31 ist bei dem dargestellten Ausführungsbeispiel eine Verdichterpumpe 26 angeschlossen, die das Gas noch über Atmosphärendruck verdichtet. An den Auslass der Verdichterpumpe 26 ist der Prüfgassensor 27 angeschlossen.

Das Trägergas muss nicht notwendigerweise der Saugleitung 19 mit dem Anschluss A1 zugeführt werden. Es kann auch in den Transportweg des abgesaugten Gases an beliebiger Stelle zugeführt werden, beispielsweise an einen Anschluss A2 der an dem Gehäuse der Vakuumpumpe 30 vorgesehen ist, oder an den Anschluss A3 am Auslass der Vakuumpumpe 30 oder an den Auslass A4 der Pumpe 31.

Das Ausführungsbeispiel von Figur 4 entspricht demjenigen von Figur 3, wobei der Trägergasanschluss A4 an dem Prüfling 20 vorgesehen ist. Der Prüfgassensor 27 kann an den Anschluss S1 oder den Anschluss S2 angeschlossen sein. Wichtig ist nur, dass er an oder vor der letzten Stufe der mehrstufigen Pumpenanordnung 18 angeordnet ist, so dass er das komprimierte Gasgemisch auswertet. Das Trägergas wird hier über den Anschluss A5 dem Prüfling 20 zugeführt, kann aber alternativ auch einem der Anschlüsse A1 bis A4 von Fig. 3 zugeführt werden.

**Patentansprüche**

1. Vorrichtung zur Dichtheitsprüfung mit einer Pumpenanordnung (18), die aus einer einen Prüfling (20) aufnehmenden Prüfkammer (10) oder aus einem Prüfling (20) Gas abpumpt, und einem an die Pumpenanordnung angeschlossenen Prüfgassensor (27),

   **dadurch gekennzeichnet,**

   **dass** die Pumpenanordnung einen über dem Atmosphärendruck liegenden hohen Druck erzeugt, und dass der Prüfgassensor (27) an den hohen Druck angeschlossen ist.

Fig.1

Fig.2

Fig.3

Fig.4

Europäisches
Patentamt

European
Patent Office

Office européen
des brevets

# EUROPÄISCHER RECHERCHENBERICHT

Nummer der Anmeldung

EP 17 15 7133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2005 164525 A (SENSISTOR TECHNOLOGIES AB) 23. Juni 2005 (2005-06-23) * das ganze Dokument * ----- | 1 | INV. G01M3/22 |
| X | US 5 553 483 A (ARMENTROUT CHARLES J [US] ET AL) 10. September 1996 (1996-09-10) * Zusammenfassung * * Anspruch 1 * * Abbildung 1 * ----- | 1 | |
| A | US 4 984 450 A (BUERGER HEINZ D [DE]) 15. Januar 1991 (1991-01-15) * Zusammenfassung * * Abbildung 1 * ----- | 1 | |

RECHERCHIERTE
SACHGEBIETE (IPC)

G01M

Der vorliegende Recherchenbericht wurde für alle Patentansprüche erstellt

| Recherchenort | Abschlußdatum der Recherche | Prüfer |
|---|---|---|
| Den Haag | 5. Juli 2017 | Kister, Clemens |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 7133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2017

| Im Recherchenbericht angeführtes Patentdokument | Datum der Veröffentlichung | Mitglied(er) der Patentfamilie | Datum der Veröffentlichung |
|---|---|---|---|
| JP 2005164525 A | 23-06-2005 | JP 4374241 B2<br>JP 2005164525 A | 02-12-2009<br>23-06-2005 |
| US 5553483 A | 10-09-1996 | KEINE | |
| US 4984450 A | 15-01-1991 | DE 3828588 C1<br>EP 0356877 A2<br>JP H0298643 A<br>US 4984450 A | 07-12-1989<br>07-03-1990<br>11-04-1990<br>15-01-1991 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005054806 A1, Sensistor
- DE 102004034381 A